(19) Europäisches Patentamt / European Patent Office / Office européen des brevets

(11) **EP 3 105 843 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(21) Anmeldenummer: **15704294.6**

(22) Anmeldetag: **10.02.2015**

(51) Int Cl.:
*H02K 37/04* *(2006.01)*          *H02K 37/20* *(2006.01)*
*H02K 1/24* *(2006.01)*          *H02K 19/10* *(2006.01)*
*H02K 21/40* *(2006.01)*

(86) Internationale Anmeldenummer:
**PCT/EP2015/052759**

(87) Internationale Veröffentlichungsnummer:
**WO 2015/118169 (13.08.2015 Gazette 2015/32)**

(54) **ELEKTROMOTOR UND ZUGEHÖRIGES BETRIEBSVERFAHREN**

ELECTRIC MOTOR AND ASSOCIATED OPERATING METHOD

MOTEUR ÉLECTRIQUE ET PROCÉDÉ DE FONCTIONNEMENT ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2014 DE 102014202360**

(43) Veröffentlichungstag der Anmeldung:
**21.12.2016 Patentblatt 2016/51**

(73) Patentinhaber: **Lenze Drives GmbH**
**32699 Extertal (DE)**

(72) Erfinder:
• **TOLKSDORF, Andreas**
  **31789 Hameln (DE)**
• **GÖTZ, Tino**
  **30974 Wennigsen (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**US-A- 4 081 703**

**Beschreibung**

Die Erfindung betrifft einen Elektromotor und ein zugehöriges Betriebsverfahren.

Die US 4,081,703 A zeigt einen Elektromotor mit einem Stator mit einer Mehrzahl von Stator-Polen mit jeweils zugehörigen Stator-Pol-Wicklungen, wobei die Stator-Pole jeweils einen Polschuh aufweisen, wobei ein jeweiliger Polschuh eine Verzahnung mit wenigstens zwei Zähnen aufweist. Der Elektromotor weist weiter einen Rotor mit zwei Rotorstücken auf, die jeweils eine identische Verzahnung aufweisen, und eine Verbindungswelle mit einer Längsachse auf, die die Polräder mechanisch und magnetisch miteinander koppelt.

Der Erfindung liegt die Aufgabe zugrunde, einen Elektromotor und zugehöriges Betriebsverfahren zur Verfügung zu stellen, die hohe Drehmomente über einen großen Drehfrequenzbereich bereitstellen können.

Die Erfindung löst diese Aufgabe durch einen Elektromotor nach Anspruch 1 und ein Verfahren nach Anspruch 8.

Der Elektromotor weist einen Stator mit einer Mehrzahl von Stator-Polen auf, die gleichmäßig über einen Umfang des Stators verteilt sein können.

Den Stator-Polen ist jeweils eine konzentrierte Stator-Pol-Wicklung zugeordnet, die bei einer Bestromung ein radial gerichtetes magnetisches Feld erzeugt.

Die Stator-Pole weisen jeweils einen Polschuh auf, wobei ein jeweiliger Polschuh eine Verzahnung mit wenigstens zwei Zähnen aufweist.

Der Elektromotor weist weiter mindestens eine, insbesondere zylindrische, Erregerwicklung mit beispielsweise axial verlaufender Wicklungsachse auf, die mechanisch drehfest mit dem Stator gekoppelt ist.

Der Elektromotor weist weiter einen Rotor auf.

Der Rotor weist mindestens zwei Polräder auf, die jeweils eine Verzahnung aufweisen. Eine Zahnanzahl und ein Zahnabstand der Polräder können identisch sein.

Der Rotor weist mindestens eine in Elektromotorlängsrichtung verlaufende Verbindungswelle auf, die eine Längsachse definiert (bzw. sich entlang einer Längsachse erstreckt) und die die Polräder mechanisch drehfest und magnetisch miteinander koppelt.

Die mindestens eine Erregerwicklung ist innerhalb des Rotors derart angeordnet, dass sie in der Verbindungswelle des Rotors ein radialsymmetrisches, zur Längsachse ausgerichtetes magnetisches Erregerfeld erzeugt, das außerhalb der Verbindungswelle radial von den jeweiligen Polrädern zu den Stator-Polen verläuft. Die Erregerwicklung kann um die Verbindungswelle gewickelt sein. Eine Wicklungsachse der Erregerwicklung kann mit einer Drehachse der Verbindungswelle identisch sein.

Der Elektromotor bildet das mechanische und magnetische Konzept eines permanenterregten subharmonischen Motors vorteilhaft weiter. Der magnetisch axial ausgerichtete Permanentmagnet wird durch einen ferromagnetischen Bereich bzw. die Verbindungswelle substituiert, der bzw. die mit beiden Polrädern eine ferromagnetische Einheit bildet. Diese Struktur kann bei Bedarf auch in mehrere einzelne Bauelemente unterteilt werden.

Für die Erregung kann in einem verbleibenden Hohlraum des Rotors eine einfache, beispielsweise zylindrische, Erregerwicklung vorgesehen sein, die beispielsweise über einen Gleichstrom versorgt wird und dem Rotor bzw. dessen Verbindungswelle ein axiales magnetisches Feld einprägt.

Die Erregerwicklung kann mit dem Stator drehfest verbunden sein, da eine Drehung der Erregerwicklung nicht notwendig ist. Zwischen der feststehenden Erregerwicklung und dem rotierenden Teil kann ein Spalt zur Aufnahme von axialen und radialen Verlagerungen des Rotors vorgesehen sein. Dies vereinfacht die elektrische Stromversorgung der Erregerwicklung erheblich, da nunmehr keine elektrische Energie in ein drehendes System übertragen werden muss. Insbesondere entfallen störanfällige und verschleißende Schleifkontakte zur Übertragung von Gleichstrom bzw. teure und verlustbehaftete Hilfswicklungen und Gleichrichter für eine induktive Stromversorgung.

Gleich- und gegenphasig zu betreibende Stator-Pol-Wicklungen können seriell bzw. parallel zu Wicklungssträngen verschaltet werden. Bei einer Einzelstrangansteuerung können die einzelnen Wicklungsstränge beispielsweise unabhängig voneinander über je eine H-Vollbrücke angesteuert werden. Bei einem Drehfeldbetrieb werden die Wicklungsstränge beispielsweise zu Sternen verschaltet und diese dann mittels eines 3-Phasen-Vollbrückenumrichters betrieben. Als weitere Betriebsart ist beispielweise eine Einzelpolansteuerung denkbar, bei der jeder einzelnen Stator-Pol-Wicklung ein H-Vollbrückenumrichter zugeordnet ist. Eine Bestromung der Stator-Pol-Wicklungen kann derart erfolgen, dass sich im Mittel ein über die Stator-Pole wanderndes magnetisches Drehfeld ergibt, so dass Abstoßungs- bzw. Anziehungskräfte zwischen den Zähnen der Polräder und den Polschuhen einen gleichsinnigen Drehmomentenbeitrag ergeben.

Mittels des erfindungsgemäßen Elektromotors sind hohe Drehmomente über einen großen Drehfrequenzbereich bereitstellbar.

Die Polräder können jeweils eine periodische (gleichmäßige, äquidistante) Verzahnung aufweisen. Die Verzahnungen der Polräder können zueinander einen Phasenversatz aufweisen. Der Phasenversatz kann die Hälfte eines Zahnabstandes der Verzahnung der Polräder betragen. Alternativ können die Verzahnungen der Polräder phasengleich ausgebildet sein und stattdessen Polschuhe mit versetzten Verzahnungen vorgesehen sein. Alternativ können die Verzahnungsbereiche der Polschuhe über den entsprechenden Polrädern untereinander phasenversetzt werden.

Ein Zahnabstand der Verzahnung der Polschuhe kann in einem Bereich zwischen dem 0,9-fachen und dem 1,1-fachen eines Zahnabstandes der Verzahnung der Polräder liegen, wodurch einem Rasten entgegengewirkt werden kann.

Ein Zahnabstand der Zähne der Polschuhe, d.h. ein Abstand zwischen den Zahnflanken der Zähne der Polschuhe, ist immer gleich bzw. konstant, auch über Lücken zwischen den Polschuhen hinweg. Eine Gesamtanzahl von Zähnen der Polschuhe (beispielsweise sechs Polschuhe mit jeweils 4 Zähnen, d.h. 6 x 4 = 24 Zähne) unterscheidet sich von einer Gesamtanzahl von Zähnen der jeweiligen Polräder, beispielsweise 23 Zähne pro Polrad. Ist die Zähnenanzahl der jeweiligen Polräder kleiner, laufen die Polräder gegensinnig zum magnetischen Drehfeld, ist sie größer, laufen die Polräder gleichsinnig zum magnetischen Drehfeld. Die Differenz der Zähnenanzahl kann auch größer als eins sein, beispielsweise zwei, dann müssen jedoch die Stator-Pol-Wicklungen anders angesteuert bzw. verschaltet werden. Ein Unterschied von zwei Zähnen benötigt dann das Drehfeld einer zweipoligen Maschine - usw.

Die Stator-Pole und die Polräder können derart ausgebildet sein, dass sich der Rotor gegenüber dem Stator mit jedem Periodendurchlauf eines mittels der Stator-Pole bewirkten Stator-Drehfeldes, d.h. bei einem Umlauf des Stator-Drehfeldes um 360 Grad, um jeweils die Zahndifferenz zwischen den Polradzähnen und der Summe der Statorpolzähne weiterbewegt.

Die Zahndifferenz bzw. der Zahnversatz $\Delta z$ je Feldumlauf kann beispielsweise mittels folgender Gleichung beschrieben werden:

$$\Delta z = (z_r - z_s) = \left( z_r - \int_k z_{ps,k} \right)$$

mit

$z_r$    : Zähneanzahl des Rotors / eines jeweiligen Polrades
$z_s$    : Gesamtzähneanzahl des Stators / Summe der Zähne der Polschuhe
$z_{ps,k}$  : Zähneanzahl des jeweiligen Polschuhs k
$i_z$    : verzahnungsbedingtes Übersetzungsverhältnis
$i$    : Gesamtübersetzungsverhältnis
$\omega_{r,m}$  : mechanische Kreisfrequenz des Rotors
$\omega_{s,\mu}$  : Kreisfrequenz des magnetischen Statordrehfelds
$\omega_{s,el}$  : elektrische Kreisfrequenz in den Statorpolwicklungen
$p$    : Polpaarzahl

Verzahnungsbedingtes Übersetzungsverhältnis

$$i_z = \frac{\omega_{s,\mu}}{\omega_{r,m}} = \frac{\omega_{s,el}}{p\,\omega_{r,m}} = \frac{z_r}{\Delta z}$$

Gesamtübersetzungsverhältnis

$$i = \frac{\omega_{s,el}}{\omega_{r,m}} = \frac{p\,z_r}{\Delta z}$$

Beispiel:

$$\Delta z = \left(23 - (6 + 6 + 6 + 6)\right) = (23 - 24) = (-1)$$

$$i_z = \frac{23}{(-1)} = (-23)$$

$$i_z = \frac{1 \cdot 23}{(-1)} = (-23)$$

Der Elektromotor kann einen Permanentmagneten aufweisen, der derart angeordnet ist, dass er in der Verbindungswelle des Rotors ein dem mittels der Erregerwicklung erzeugten magnetischen Erregerfeld überlagertes radialsymmetrisches, zur Längsachse ausgerichtetes magnetisches Konstant-Erregerfeld erzeugt, das außerhalb der Verbindungswelle radial von den jeweiligen Polrädern zu den Stator-Polen geführt ist. Mittels des beispielsweise parallel zu einer Wicklungsachse der Erregerwicklung angeordneten Permanentmagneten kann eine Basiserregung ohne zusätzlichen Leistungsbedarf erreicht werden. Die Basiserregung kann je nach Betriebsart über die Bestromung der Erregerwicklung verstärkt oder geschwächt werden.

Die Polräder und/oder die Verbindungswelle können aus einem magnetisierbaren Werkstoff bestehen, der auch nach dem Erzeugen des Erregerfelds mittels der Erregerwicklung einen magnetischen Restfluss aufrechterhält, also eine sogenannte magnetische Remanenz aufweist. Auf diese Weise kann die magnetische Erregung des Rotors voreingestellt werden, so dass der Rotor mit zeitlich begrenzten hohen Strömen vorprogrammiert werden kann, womit eine gewünschte Erregung mit geringeren Strömen und damit mit geringerer Wärmeerzeugung eingeprägt werden kann.

Der Rotor kann ein erstes, ein zweites und ein drittes Polrad aufweisen, wobei die Polräder in Richtung der Längsachse der Verbindungswelle beabstandet sind. Der Elektromotor kann eine erste und eine zweite Erregerwicklung innerhalb des Stators aufweisen, wobei die erste Erregerwicklung zwischen dem ersten und dem zweiten Polrad angeordnet ist und die zweite Erregerwicklung zwischen dem zweiten und dem dritten Polrad angeordnet ist, wobei die Erregerwicklungen dazu ausgebildet sind, in Richtung der Längsachse zueinander entgegengesetzte magnetische Felder zu erzeugen. Mit anderen Worten sind drei axial bzw. in Längsrichtung hintereinander angeordnete Polräder und zwei zwischen den Polrädern angeordnete Erregerwicklungen vorgesehen, wobei die Erregerwicklungen derart bestromt sind, dass sie zwei entgegengesetzte axiale Magnetfelder erzeugen, womit ein axialer Streufluss über die äußeren Stirnflächen der Polräder unterbunden wird. Für diesen Fall.kann der Stator entsprechend gestreckt werden.

Es können alternativ auch drei axial angeordnete Wicklungen und zwei zwischen den Wicklungen angeordnete Polräder vorgesehen sein, wobei die Wicklungen derart bestromt sind, dass sie axiale Magnetfelder mit alternierender Ausrichtung erzeugen, womit ein axialer Streufluss über die äußeren Stirnflächen der Polräder unterbunden wird. Auch für diesen Fall kann der Stator entsprechend gestreckt werden.

Bei dem Verfahren zum Betreiben des oben genannten Elektromotors werden die Stator-Pol-Wicklungen derart bestromt, dass sich ein umlaufendes Stator-Drehfeld mit vorgebbarer Umlaufrichtung und vorgebbarer Drehfrequenz ergibt. Das Stator-Drehfeld kann kontinuierlich umlaufen oder in diskreten Schritten wandern.

Die Erregerwicklung kann derart bestromt werden, dass die während einer Drehbewegung in den Stator-Pol-Wicklungen induzierten Spannungen unterhalb einer vorgegebenen Spannungsschwelle bleiben, was einem Feldschwächungsbetrieb entspricht.

Die Erregerwicklung kann derart bestromt werden, dass ein Erregerstrom unterhalb einer vorgegebenen Stromschwelle bleibt, um eine thermische Überlastung zu vermeiden.

Die Erfindung wird nachfolgend unter Bezugnahme auf die Zeichnung detailliert beschreiben. Hierbei zeigt schematisch:

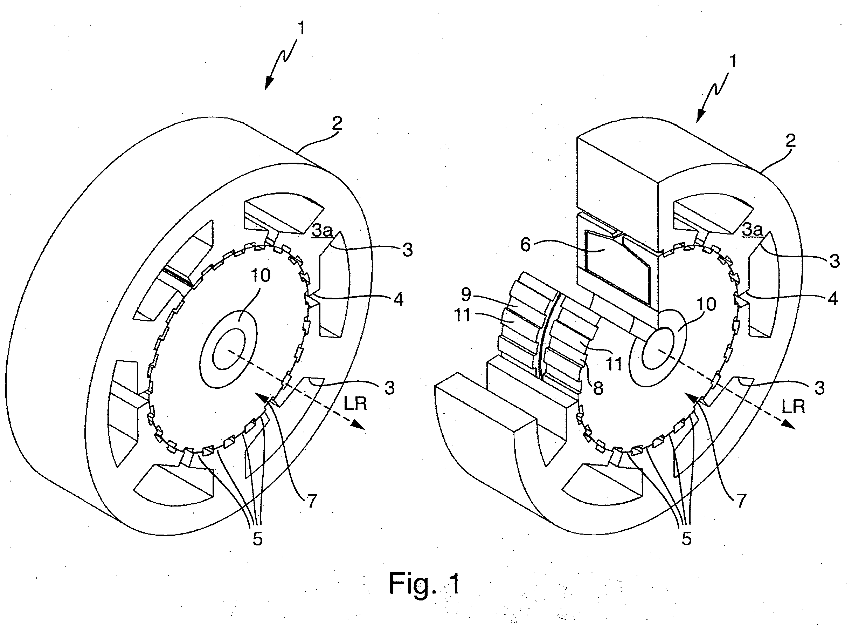

Fig. 1   einen Elektromotor in zwei unterschiedlichen perspektivischen Darstellungen.

Fig. 1 zeigt schematisch einen Elektromotor 1 in zwei unterschiedlichen perspektivischen Darstellungen. Bei der Darstellung rechts ist ein Bereich ausgeschnitten, um eine Darstellung des Inneren des Elektromotors zu ermöglichen.

Der Elektromotor 1 weist einen Stator 2 mit sechs Stator-Polen 3 auf, die gleichmäßig auf einem Kreis, der senkrecht zu einer Längsrichtung bzw. Längserstreckung des Elektromotors 2 verläuft, verteilt sind. Ein Mittelpunkt des Kreises liegt auf einer Längsachse LR einer Verbindungswelle 10, die weiter unten beschrieben wird.

Ein jeweiliger Stator-Pol 3 weist eine nicht dargestellte, beispielsweise mittels eines Frequenzumrichters bestrombare, Stator-Pol-Wicklung auf. Eine jeweilige Stator-Pol-Wicklung ist um Stator-Pol-Stege 3a gewickelt. Eine Wicklungsachse einer jeweiligen Stator-Pol-Wicklung verläuft radial, d.h. steht senkrecht auf die Längsrichtung des Elektromotors 2 und schneidet die Längsachse LR der Verbindungswelle 10.

Die Stator-Pole 3 weisen jeweils einen Polschuh 4 auf, der an einen jeweiligen Stator-Pol-Steg 3a angrenzt. Ein jeweiliger Polschuh 4 weist eine Verzahnung mit mehreren Zähnen 5 auf.

Der Elektromotor 1 weist weiter eine Erregerwicklung 6 auf (schematisch im Schnitt im Bild rechts dargestellt), die mechanisch drehfest mit dem Stator 2 verbunden ist.

Der Elektromotor 1 weist weiter einen Rotor 7 auf. Der Rotor umfasst zwei Polräder 8, 9, die jeweils eine Verzahnung aufweisen, und eine Verbindungswelle 10, die die Längsachse LR bzw. Längsrichtung definiert. Die Verbindungswelle 10 besteht aus ferromagnetischem Material und koppelt die Polräder 8, 9 mechanisch und magnetisch miteinander.

Die Erregerwicklung 6 ist im Inneren des Rotors 7 um die Verbindungswelle 10 gewickelt, so dass sie in der Verbindungswelle 10 ein radialsymmetrisches, zur Längsachse LR ausgerichtetes magnetisches Erregerfeld erzeugt, das außerhalb der Verbindungswelle 10 radial von den jeweiligen Polrädern 8, 9 zu den Stator-Polen 3 verläuft. Die Erregerwicklung 6 ist derart angeordnet, dass sie keinen mechanischen und elektrischen Kontakt zur Verbindungswelle 10 aufweist.

Die Polräder 8, 9 weisen jeweils eine gleichmäßig über ihren Umfang verlaufende Verzahnung 11 auf, wobei die Verzahnungen 11 der Polräder 8, 9 zueinander einen Phasenversatz um einen halben Zahnabstand aufweisen.

Eine Längsrichtung der Zähne der Verzahnungen 11 und eine Längsrichtung der Zähne 5 der Polschuhe 4 sind identisch und entsprechen der Längsrichtung des Elektromotors 1.

Ein Zahnabstand der Verzahnung der Polschuhe 4 liegt in einem Bereich zwischen dem 0,9-fachen und dem 1,1-fachen eines Zahnabstandes der Verzahnung 11 der Polräder 8, 9.

Die Stator-Pol-Wicklungen werden im Betrieb des Elektromotors 1 derart kontinuierlich oder sequentiell bestromt, dass sich ein umlaufendes magnetisches Stator-Drehfeld ergibt. Die.Stator-Pole 3 und die Polräder 8, 9 sind geometrisch derart dimensioniert, dass sich der Rotor 7 gegenüber dem Stator 2 bei jeder vollständigen Umdrehung des Stator-Drehfeldes um jeweils einen Zahnabstand der Verzahnung der Polschuhe 3 weiterbewegt.

Die Erregerwicklung 6 wird derart bestromt, dass die während einer Drehbewegung in den Stator-Pol-Wicklungen induzierten Spannungen unterhalb einer vorgegebenen Spannungsschwelle bleiben und ein Erregerstrom unterhalb einer vorgegebenen Stromschwelle bleibt.

Bei den gezeigten Ausführungsformen wird ein axiales Erregerfeld in einem drehenden System über eine feststehende axial ausgerichtete Erregerspule 6 erzeugt. Zusätzlich sind aufeinander abgestimmte, gezahnte Stator-Pole 3 bzw. Polschuh 4 und Polräder 8, 9 vorgesehen, so dass sich die magnetische Energie im Luftspalt periodisch mit der Zahnteilung und unabhängig von der Anzahl der Stator-Pole ändert. Dadurch ergeben sich bei gleichen Auslegungsgrößen gegenüber einfachen Drehfeldmaschinen höhere Momente bei identischer Stator-Pol-Anzahl.

Gegenüber dem klassischen Drehfeldmotor stellt sich eine dem Drehfeld je nach Bauart gleichsinnige oder gegensinnige synchrone Rotordrehung mit ganzzahliger Untersetzung ein, d.h. ein subharmonischer Betrieb. Dies entspricht einem Motor mit integriertem Untersetzungsgetriebe.

**Patentansprüche**

1. Elektromotor (1), aufweisend:

   - einen Stator (2) mit einer Mehrzahl von Stator-Polen (3) mit jeweils zugehörigen Stator-Pol-Wicklungen, wobei die Stator-Pole (3) jeweils einen Polschuh (4) aufweisen, wobei ein jeweiliger Polschuh (4) eine Verzahnung mit wenigstens zwei Zähnen (5) aufweist, und
   - einen Rotor (7), aufweisend:

     - wenigstens zwei Polräder (8, 9), die jeweils eine Verzahnung aufweisen, und
     - wenigstens eine Verbindungswelle (10) mit einer Längsachse (LR), die die Polräder (8, 9) mechanisch und magnetisch miteinander koppelt,

   **dadurch gekennzeichnet, dass**

     - der Elektromotor (1) mindestens eine Erregerwicklung (6) aufweist, die mechanisch mit dem Stator (2) gekoppelt ist,

     - wobei die mindestens eine Erregerwicklung (6) derart angeordnet ist, dass sie in der Verbindungswelle (10) des Rotors (7) ein radialsymmetrisches, zur Längsachse ausgerichtetes magnetisches Erregerfeld erzeugt, das außerhalb der Verbindungswelle (10) von den jeweiligen Polrädern (8, 9) zu den Stator-Polen (3) geführt ist.

**2.** Elektromotor (1) nach Anspruch 1, **dadurch gekennzeichnet, dass**

- die Polräder (8, 9) jeweils eine periodische Verzahnung (11) aufweisen, wobei die Verzahnungen (11) der Polräder (8, 9) zueinander einen Phasenversatz aufweisen.

**3.** Elektromotor (1) nach Anspruch 2, **dadurch gekennzeichnet, dass**

- der Phasenversatz die Hälfte eines Zahnabstandes der Verzahnung (11) der Polräder (8, 9) beträgt.

**4.** Elektromotor (1) nach einem der vorhergehenden Ansprüche, **dadurch gekennzeichnet, dass**

- ein Zahnabstand der Verzahnung der Polschuhe (4) in einem Bereich zwischen dem 0,9-fachen und dem 1,1-fachen eines Zahnabstandes der Verzahnung der Polräder (8, 9) liegt.

**5.** Elektromotor (1) nach einem der vorhergehenden Ansprüche, **dadurch gekennzeichnet, dass**

- die Stator-Pole (3) und die Polräder (8, 9) derart ausgebildet sind, dass sich der Rotor (7) gegenüber dem Stator (2) mit jedem Periodendurchlauf eines mittels der Stator-Pole (3) bewirkten Stator-Drehfeldes um eine Zahnanzahldifferenz zwischen einer Anzahl von Zähnen der jeweiligen Polräder (8, 9) und einer Summe einer Anzahl von Zähnen aller Polschuhe (4) weiterbewegt.

**6.** Elektromotor (1) nach einem der vorhergehenden Ansprüche, **gekennzeichnet durch**,

- einen Permanentmagneten, der derart angeordnet ist, dass er in der Verbindungswelle (10) des Rotors (7) ein radialsymmetrisches, zur Längsachse (LR) ausgerichtetes magnetisches Konstant-Erregerfeld erzeugt, das außerhalb der Verbindungswelle (10) von den jeweiligen Polrädern (8, 9) zu den Stator-Polen (3) geführt ist.

**7.** Elektromotor (1) nach einem der vorhergehenden Ansprüche, **dadurch gekennzeichnet, dass**

- der Rotor (7) ein erstes, ein zweites und ein drittes Polrad aufweist, wobei die Polräder in Richtung der Längsachse der Verbindungswelle (10) beabstandet sind, und
- der Elektromotor (1) eine erste und eine zweite Erregerwicklung aufweist, wobei die erste Erregerwicklung zwischen dem ersten und dem zweiten Polrad angeordnet ist und die zweite Erregerwicklung zwischen dem zweiten und dem dritten Polrad angeordnet ist, wobei die Erregerwicklungen dazu ausgebildet sind, in Richtung der Längsachse zueinander entgegengesetzte magnetische Felder zu erzeugen.

**8.** Verfahren zum Betreiben eines Elektromotors (1) nach einem der vorhergehenden Ansprüche, **dadurch gekennzeichnet, dass**

- die Stator-Pol-Wicklungen derart bestromt werden, dass sich ein umlaufendes- Stator-Drehfeld ergibt.

**9.** Verfahren nach Anspruch 8, **dadurch gekennzeichnet, dass**

- die Erregerwicklung derart bestromt wird, dass die während einer Drehbewegung in den Stator-Pol-Wicklungen induzierten Spannungen unterhalb einer vorgegebenen Spannungsschwelle bleiben.

**10.** Verfahren nach Anspruch 8 oder 9, **dadurch gekennzeichnet, dass**

- die Erregerwicklung derart bestromt wird, dass ein Erregerstrom unterhalb einer vorgegebenen Stromschwelle bleibt.

**Claims**

**1.** Electric motor (1), comprising:

- a stator (2) having a plurality of stator poles (3), each having respective stator pole windings, wherein the stator poles (3) each include a pole shoe (4), wherein a respective pole shoe (4) includes a toothing having at least two teeth (5), and
- a rotor (7), comprising:

  - at least two pole wheels (8, 9), each including a toothing, and
  - at least one connecting shaft (10) having a longitudinal axis (LR) for mechanical and magnetic coupling of the pole wheels (8, 9) to each other,

**characterized in that**

- the electric motor (1) includes at least one exciter winding (6) which is mechanically coupled to the stator (2),
- wherein the at least one exciter winding (6) is arranged such that it generates in the connecting shaft (10) of the rotor (7) a radially symmetrical, magnetic exciting field oriented towards the longitudinal axis, which exciting field is guided outside of the connecting shaft (10) from the respective pole wheels (8, 9) to the stator poles (3).

2. Electric motor (1) according to claim 1, **characterized in that**

   - the pole wheels (8, 9) each include a periodic toothing (11), wherein the toothings (11) of the pole wheels (8, 9) have a phase offset in relation to each other.

3. Electric motor (1) according to claim 2, **characterized in that**

   - the amount of the phase offset is half of a tooth distance of the toothing (11) of the pole wheels (8, 9).

4. Electric motor (1) according to any of the preceding claims, **characterized in that**

   - a tooth distance of the toothing of the pole shoes (4) is in a range between 0.9 times to 1.1 times a tooth distance of the toothing of the pole wheels (8, 9).

5. Electric motor (1) according to any of the preceding claims, **characterized in that**

   - the stator poles (3) and the pole wheels (8, 9) are configured such that the rotor (7) moves on, in relation to the stator (2), with each periodic cycle of a stator rotating field produced by means of the stator poles (3) by a difference of tooth numbers between a number of teeth of the respective pole wheels (8, 9) and a sum of a number of teeth of all pole shoes (4).

6. Electric motor (1) according to any of the preceding claims, **characterized by**

   - a permanent magnet arranged such that it generates in the connecting shaft (10) of the rotor (7) a radially symmetrical, magnetic constant exciting field oriented towards the longitudinal axis (LR), which exciting field is guided outside of the connecting shaft (10) from the respective pole wheels (8, 9) to the stator poles (3).

7. Electric motor (1) according to any of the preceding claims, **characterized in that**

   - the rotor (7) has a first, a second and a third pole wheel, wherein the pole wheels are spaced in the direction of the longitudinal axis of the connecting shaft (10), and
   - the electric motor (1) includes a first and a second exciter winding, wherein the first exciter winding is arranged between the first and the second pole wheels and the second exciter winding is arranged between the second and the third pole wheels, wherein the exciter windings are configured to generate mutually opposite magnetic fields in the direction of the longitudinal axis.

8. Method for operating an electric motor (1) according to any of the preceding claims, **characterized in that**

   - the stator pole windings are powered such that a revolving stator rotating field is obtained.

9. Method according to claim 8, **characterized in that**

- the exciter winding is powered such that the voltages induced in the stator pole windings during a rotary movement remain below a predetermined voltage threshold.

**10.** Method according to claim 8 or 9, **characterized in that**

- the exciter winding is powered such that an exciting current remains below a predetermined current threshold.


**Revendications**

**1.** Moteur électrique (1), comportant :

- un stator (2) présentant une pluralité de pôles de stator (3) comprenant des enroulements de pôle de stator respectivement associés, dans lequel les pôles de stator (3) comportent respectivement une pièce polaire (4), dans lequel une pièce polaire (4) respective présente une denture dotée d'au moins deux dents (5), et
- un rotor (7), comportant :
- au moins deux roues polaires (8, 9) qui présentent respectivement une denture, et
- au moins un arbre de liaison (10) doté d'un axe longitudinal (LR), qui couple mécaniquement et magnétiquement l'une à l'autre les roues polaires (8, 9),

**caractérisé en ce que**

- le moteur électrique (1) comporte au moins un enroulement d'excitation (6) qui est couplé mécaniquement au stator (2),
- dans lequel l'au moins un enroulement d'excitation (6) est disposé de manière à ce qu'il produise dans l'arbre de liaison (10) du rotor (7) un champ magnétique d'excitation de symétrie radiale orienté vers l'axe longitudinal, qui est guidé à l'extérieur de l'arbre de liaison (10) depuis les roues polaires (8, 9) respectives vers les pôles de stator (3).

**2.** Moteur électrique (1) selon la revendication 1, **caractérisé en ce que**

- les roues polaires (8, 9) comportent respectivement une denture (11) périodique, dans lequel les dentures (11) des roues polaires (8, 9) présentent un décalage de phase l'une par rapport à l'autre.

**3.** Moteur électrique (1) selon la revendication 2, **caractérisé en ce que**

- le décalage de phase est égal à la moitié d'un espacement entre dents de la denture (11) des roues polaires (8, 9).

**4.** Moteur électrique (1) selon l'une quelconque des revendications précédentes, **caractérisé**

- **en ce qu'**un espacement entre dents de la denture de la pièce polaire (4) se situe dans la plage comprise entre 0,9 fois et 1,1 fois un espacement entre dents de la denture des roues polaires (8,9).

**5.** Moteur électrique (1) selon l'une quelconque des revendications précédentes, **caractérisé**

- **en ce que** les pôles de stator (3) et les roues polaires (8, 9) sont réalisées de manière à ce que le rotor (7) se déplace par rapport au stator (2) lors de chaque cycle périodique d'un champ tournant de rotor provoqué au moyen des pôles de stator (3), d'une différence de nombre de dents entre un nombre de dents des roues polaires (8, 9) respectives et une somme d'un nombre de dents de toutes les pièces polaires (4).

**6.** Moteur électrique (1) selon l'une quelconque des revendications précédentes,
**caractérisé par**

- un aimant permanent qui est disposé de manière à générer dans l'arbre de liaison (10) du rotor (7) un champ magnétique d'excitation constant de symétrie radiale, orienté vers l'axe longitudinal (LR), qui est guidé à l'extérieur de l'arbre de liaison (10) depuis les roues polaires (8, 9) respectives vers les pôles de stator (3).

**7.** Moteur électrique (1) selon l'une quelconque des revendications précédentes, **caractérisé en ce que**

- le rotor (7) comprend des première, deuxième et troisième roues polaires, dans lequel les roues polaires sont espacées dans la direction de l'axe longitudinal de l'arbre de liaison (10), et
- le moteur électrique (1) comprend des premier et deuxième enroulements d'excitation, dans lequel le premier enroulement d'excitation est disposé entre les première et deuxième roues polaires et le deuxième enroulement d'excitation est disposé entre les deuxième et troisième roues polaires, dans lequel les enroulements d'excitation sont conçus pour générer des champs magnétiques opposés l'un à l'autre dans la direction de l'axe longitudinal.

**8.** Procédé de mise en fonctionnement d'un moteur électrique (1) selon l'une quelconque des revendications précédentes, **caractérisé en ce que**

- les enroulements de pôles de stator sont alimentés en courant de manière à produire un champ tournant de stator circonférentiel.

**9.** Procédé selon la revendication 8, **caractérisé en ce que**

- l'enroulement d'excitation est alimenté en courant de manière à ce que des tensions induites pendant un mouvement de rotation dans les enroulements de pôles de stator restent inférieures à un seuil de tension prédéterminé.

**10.** Procédé selon la revendication 8 ou 9, **caractérisé en ce que**

- l'enroulement d'excitation est alimenté en courant de manière à ce qu'un courant d'excitation reste inférieur à un seuil de courant prédéterminé.

Fig. 1

**IN DER BESCHREIBUNG AUFGEFÜHRTE DOKUMENTE**

**In der Beschreibung aufgeführte Patentdokumente**

- US 4081703 A